# EUROPEAN PATENT APPLICATION

(11) **EP 4 679 685 A1**
(43) Date of publication of application: **14.01.2026**
(21) Application number: 23923199.6
(22) Date of filing: 07.03.2023
(51) Int. Cl.: H02K 11/215, H02K 7/116

(54) **ROTATION ACTUATOR**

(71) Applicant: Harmonic Drive Systems Inc., Shinagawa-ku Tokyo 140-0013 (JP)
(72) Inventor: KATO, Yuki, Azumino-shi, Nagano 399-8305 (JP)
(74) Representative: TBK
(86) International application number: PCT/JP2023/008658
(87) International publication number: WO 2024/185046

(57) **Abstract**

A rotary actuator (1) has a hollow motor (2), a strain wave gearing (4), and an output member (6). An actuator hollow portion (70) is defined by a sleeve (7) extending through the actuator in an axial direction, an output-side detector (9) is disposed at a front side of the strain wave gearing (4), and an input-side detector (8) is disposed at a motor rear side. A rear end part (71) of the sleeve (7) is fixed to a side of the motor housing (21), which is a fixed-side member, and a front end part (72) of the sleeve extends into a center hole of the output member (6). An outer peripheral surface of the front end part (72) of the sleeve, which is positioned near a center of rotation of the output member (6), is used as a part for attaching a fixed-side detector component of the output-side detector (9); therefore, it is possible to reduce any decrease in detection accuracy due to, *inter alia,* tilting of the output member (6).

## Description

### TECHNICAL FIELD

The present invention relates to a hollow rotary actuator in which a hollow portion is formed by a cylindrical sleeve that axially passes through a coaxially arranged hollow motor and strain wave gearing.

### BACKGROUND ART

In a hollow rotary actuator, a hollow portion is used as, *inter alia,* a space in which wires and other members are disposed. In the rotary actuators described in Patent Documents 1 and 2, a cylindrical sleeve is disposed so as to pass in an axial direction through a central part of the rotary actuator, and an actuator hollow portion is defined by a sleeve inner peripheral surface. The sleeve prevents lubricant from leaking out to the hollow portion, and protects wires or the like disposed inside the hollow portion. Installed in the hollow rotary actuator are a motor encoder that detects rotation of a hollow motor shaft and an output-side encoder that detects reduced rotation of a strain wave gearing, and drive control for the rotary actuator is performed on the basis of detection information from the encoders.

In a rotary actuator, a load-side member is linked to a reduced-rotation output member positioned on a front-end side of the actuator (the output member of the strain wave gearing). When an output-side encoder is installed on an outer side of the output member (front side in the axial direction), problems are encountered such as reduced usability for a user of the rotary actuator and increased shaft length. If the output-side encoder is incorporated inside the strain wave gearing, it is necessary to prevent the output-side encoder from being affected by a lubricant such as grease filled or applied inside the strain wave gearing, and it is also necessary to devise a way to route encoder wires from the inside to the outside.

In Patent Document 3, a configuration is adopted in which an output-side encoder that detects a rotation state of an output member of a strain wave gearing is disposed on a rear-end side of a rotary actuator (rear-end side of a motor). A cylindrical sleeve is disposed so as to pass in an axial direction through a central part of the rotary actuator, and an actuator hollow portion is defined by a sleeve inner peripheral surface. An axially front end part of the sleeve is fixed to the output member of the strain wave gearing and the sleeve rotates integrally with the output member. Rotation of the sleeve is detected by the output-side encoder disposed at the motor rear-end side, whereby rotation information, such as a rotation angle of the output member positioned at the front-end side, is detected by the output-side encoder disposed at the rear-end side. In this case, a magnetic or optical code wheel of the output-side encoder is attached to a rear-end part of the sleeve, and rotation of the code wheel is detected by a magnetic or optical sensor attached to a motor housing on the fixed side.

The output member of the strain wave gearing to which the front-end part of the sleeve is fixed may experience tilting or the like due to a moment load or the like acting from the load side. At the side with the rear-end part of the sleeve, which is long in the axial direction and the front-end part of which is fixed to the output member, the effect of tilting or the like is more pronounced, and there is a risk that the accuracy of detection by the output-side encoder will decrease.

In a rotary actuator (a motor assembly with gears) described in Patent Document 4, a front-end part of a sleeve is fixed to an output member using an adhesive that is elastic after being cured, and a rear-end part of the sleeve is supported by a sliding bearing, which minimizes any decrease in detection accuracy caused by, *inter alia,* tilting of the sleeve.

### PRIOR ART LITERATURE

### PATENT DOCUMENTS

Patent Document 1: JP 2006-144971 A
Patent Document 2: JP 2002-243000 A
Patent Document 3: JP 2001-218422 A
Patent Document 4: WO 2010/089796 A1

### DISCLOSURE OF THE INVENTION

### PROBLEMS TO BE SOLVED BY THE INVENTION

An object of the present invention is to provide a rotary actuator in which an actuator hollow portion is defined by a cylindrical sleeve extending therethrough in an axial direction, and an output-side detector that detects reduced rotation is disposed near an output member that outputs reduced rotation, so that a rotation state of the output member can be accurately detected without any effect from, *inter alia,* tilting of the output member.

Another object of the present invention is to provide a rotary actuator in which an actuator hollow portion is defined by a cylindrical sleeve extending through in an axial direction, an output-side detector is disposed near an output member on a front-end side of a strain wave gearing, an input-side detector that detects motor rotation is disposed on a motor rear-end side, and it is possible for wires of both detectors to be brought together in one place and routed to the outside.

### MEANS USED TO SOLVE THE ABOVE-MENTIONED PROBLEMS

A rotary actuator of the present invention is characterized by comprising:
a hollow motor through which a hollow motor shaft rotatably supported by a motor housing extends in an axial direction;
a strain wave gearing that is coaxially disposed in the hollow motor at a front end in the axial direction and that reduces rotation outputted by the hollow motor;
an output member that is coaxially disposed in the strain wave gearing at a front end in the axial direction and that transmits the reduced rotation outputted from the strain wave gearing to a load side;
an output-side detector that detects a rotation state of the output member;
a cylindrical sleeve extending in the axial direction through the hollow motor shaft, the strain wave gearing, and the output member; and
an actuator hollow portion that is formed by the sleeve and is open at both ends in the axial direction,
the sleeve being a fixed-side member that has a rear end part fixed to a housing rear end part of the motor housing, the housing rear end part being positioned at a rear end of the motor housing in the axial direction, and
the output-side detector including
a fixed-side detector component that is attached to a front end part of the sleeve passing through the output member, and
a rotation-side detector component that is attached to the output member so as to face the fixed-side detector component.

In the rotary actuator of the present invention, the rear end part of the cylindrical sleeve extending through the center of the actuator in the axial direction is fixed to the motor housing, which is a fixed-side member, and the front end part of the sleeve extends to the output member. Since the sleeve is a fixed member, the front end part of the sleeve, which is positioned near the center of rotation of the output member, can be used as a part for attaching the fixed-side detector component of the output-side detector. Specifically, the output-side detector is incorporated in a center-side region of the output member through which the front end part of the sleeve passes. As a result, effects of, *inter alia,* tilting of the output member on the output-side detector can be reduced and any decrease in detection accuracy can be minimized, unlike when the output-side detector is disposed on the side having the rear end part of the sleeve, which is set apart from the output member in the axial direction. Moreover, since the output-side detector is disposed on an inner side of the output member, the load-side member can be easily attached to the output member without affecting the output-side detector.

Furthermore, unlike prior-art rotary actuators, the sleeve does not rotate integrally with the output member; therefore, the sleeve can be used as a region for securing another component. Moreover, when the sleeve rotates, the internal wires disposed inside the sleeve have needed to be protected from coming into contact with the rotating sleeve, but there is no such need with this rotary actuator.

Furthermore, the rotary actuator of the present invention additionally comprises
an input-side detector that detects a rotation state of the hollow motor shaft,
a detector circuit board attached to a region on the side having the motor housing where the rear end part of the sleeve is positioned, and
a signal transmission path connecting the detector circuit board and the fixed-side detector component of the output-side detector attached to the front end part of the sleeve,
the signal transmission path including a wire group disposed in a gap between the hollow motor shaft and the sleeve, a wire patten printed on a flexible board adhered to a sleeve outer peripheral surface of the sleeve, or a wire pattern directly printed on the sleeve outer peripheral surface.

In the rotary actuator having the above configuration, wires routed from the output-side detector, which is in a position set apart from the input-side detector in the axial direction toward the front side, can be routed rearward through a gap between the hollow motor shaft and the sleeve and can be brought together on the detector circuit board of the input-side detector. Alternatively, signals from the output-side detector can be brought together on the detector circuit board via a wire pattern formed using the outer peripheral surface of the sleeve, which is a fixed-side member. Outputs of both detectors can thereby be brought together in one location and routed to the outside.

Furthermore, in the rotary actuator of the present invention, additionally,
the front end part of the sleeve and the output member are sealed together by an oil seal, and the rear end part of the sleeve is fixed in a sealed state to the housing rear end part.

In the present invention, since the sleeve is a fixed member attached to the motor housing, there is no rotary sliding portion at the motor-side rear end part of the sleeve. A reliable seal can be established between the rear end part of the sleeve and the housing rear end part of the motor housing. Therefore, electric components constituting the input-side detector disposed inside the motor rear end part can be reliably protected from the outside.

### BRIEF DESCRIPTION OF THE DRAWINGS

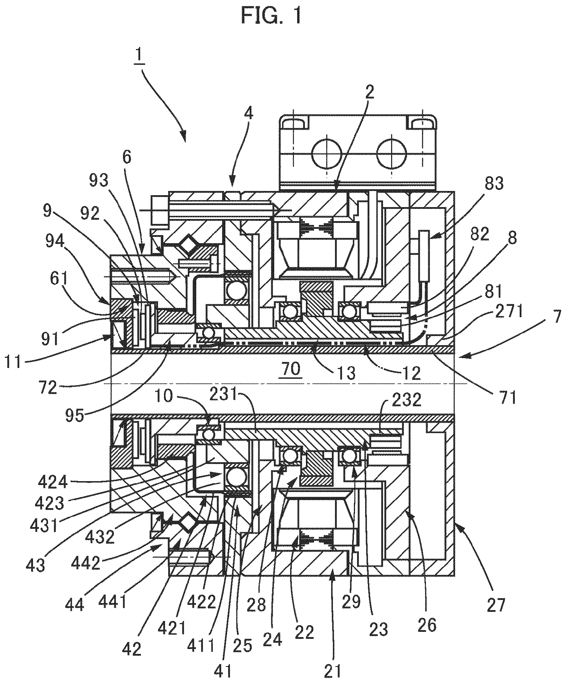

FIG. 1 is a schematic longitudinal cross-sectional view of a rotary actuator to which the present invention is applied.

### MODE FOR CARRYING OUT THE INVENTION

A rotary actuator according to an embodiment of the present invention shall be described below with reference to the drawings. The embodiment described below presents one example of an application of the present invention; there is no intention for the present invention to be limited to the embodiment.

Referring to FIG. 1, a rotary actuator 1 according to the embodiment comprises: a hollow motor 2; a strain wave gearing 4 that is coaxially disposed at a front end of the hollow motor 2 in the axial direction and that reduces rotation of the hollow motor 2; an output member 6 that is coaxially disposed at a front end of the strain wave gearing 4 in the axial direction and that transmits reduced rotation outputted from the strain wave gearing 4 to a load side (not shown); and a cylindrical sleeve 7 that axially extends through center parts of the hollow motor 2, the strain wave gearing 4, and the output member 6. An actuator hollow portion 70 that is open at both axial ends is formed by the sleeve 7. The rotary actuator 1 also comprises an input-side detector 8 disposed in a rear-end side region of the hollow motor 2 in order to detect a rotation state (rotation position, speed) of the hollow motor 2, and an output-side detector 9 disposed near the output member 6 in order to detect a rotation position of the output member 6.

The hollow motor 2 includes a motor housing 21, a motor stator 22 attached to the motor housing 21, a hollow motor shaft 23 rotatably supported by the motor housing 21, and a motor rotor 24 attached to an outer peripheral surface of the hollow motor shaft 23. The motor housing 21 is constituted of a cylindrical housing body portion having a disc-form attachment flange 25 formed on a front end and a disc-form end plate 26 formed on a rear end, and a cup-shaped detector cover 27 that is coaxially attached to a rear end of the end plate 26. The hollow motor shaft 23 is supported by motor bearings 28, 29, which are attached to the attachment flange 25 and the end plate 26, respectively. A shaft front end part 231 of the hollow motor shaft 23 protrudes forward from the attachment flange 25, and a shaft rear end part 232 protrudes rearward from the rear-side motor bearing 29.

The strain wave gearing 4 includes a rigid internally toothed gear 41, a cup-shaped flexible externally toothed gear 42 coaxially disposed on an inner side of the internally toothed gear, and a wave generator 43 coaxially fitted to an inner side of the externally toothed gear 42. The strain wave gearing 4 also includes a reducer bearing 44 that supports the internally toothed gear 41 and the externally toothed gear 42 so as to enable relative rotation. The internally toothed gear 41 is held on both axial sides between the attachment flange 25 of the hollow motor 2 and an outer race 441 of the reducer bearing 44, in which state the three components are fastened together using fastening bolts. The externally toothed gear 42 includes a cylindrical portion 421 capable of flexing in a radial direction, external teeth 422 formed in an outer peripheral surface portion of the cylindrical portion 421 at one side where there is an open end, a diaphragm 423 extending radially inward from the other end of the cylindrical portion 421, and a cylindrical rigid boss 424 integrally formed on an inner peripheral edge of the diaphragm 423. The externally toothed gear 42 is disposed such that the open end faces the attachment flange 25 of the hollow motor 2, and the boss 424, positioned on a front side in the axial direction, is coaxially fitted in and fixed to a center hole of an inner race 442 of the reducer bearing 44. The wave generator 43 includes an annular rigid plug 431 coaxially fitted in and fixed to an outer peripheral surface of the shaft front end part 231 of the hollow motor shaft 23, and a wave generator bearing 432 mounted on a non-circular outer peripheral surface of the rigid plug 431, which in the present example is an ellipsoidal outer peripheral surface. The wave generator 43 causes the portion of the externally toothed gear 42 where the external teeth 422 are formed to flex into an ellipsoidal shape, and the external teeth 422 positioned at both ends of the major axis of the ellipsoidal shape mesh with internal teeth 411 of the internally toothed gear 41.

In the present example, the output member 6 is integrally formed on the inner race 442 of the reducer bearing 44 fixed to the externally toothed gear 42. Specifically, on the inner race 442 there is formed an annular protrusion that protrudes forward from an axially forward-facing end surface of the inner race 442, the annular protrusion functioning as the output member 6. The output member 6 may be manufactured as a separate member and fastened to the front-side end surface of the inner race 442.

The cylindrical sleeve 7 extends from a rear end surface of the detector cover 27, which defines a rear end of the rotary actuator 1 in the axial direction, to a front end surface of the output member 6, which defines a front end of the rotary actuator 1 in the axial direction. The sleeve 7 is a fixed member that is fixed to the motor housing 21. Specifically, a rear end part 71 of the sleeve 7 is fixed to a circular inner peripheral edge part 271 of the detector cover 27. A rear end surface of the rear end part 71 is exposed rearward from the detector cover 27. The sleeve 7 passes through the hollow motor shaft 23 of the hollow motor 2 and passes through center holes of the rigid plug 431 and boss 424 of the strain wave gearing 4, a front end part 72 of the sleeve extends into a center hole 61 of the output member 6, and a front end surface of the sleeve is exposed forward.

The input-side detector 8 is a magnetic encoder or optical encoder, including a code wheel 81 on which magnetically or optically detectable detection codes are circumferentially arranged, and a detection unit 82 capable of magnetically or optically reading the code wheel 81. The code wheel 81 is attached to an outer peripheral surface portion of the shaft rear end part 232 of the hollow motor shaft 23, which protrudes rearward from the rear-side motor bearing 29. The detection unit 82 is attached to an inner peripheral surface portion of the end plate 26, which surrounds the outer peripheral surface portion of the shaft rear end part 232 so as to face the code wheel 81 at a fixed spacing. Between the end plate 26 and the detector cover 27 is disposed a detector circuit board 83 on which, *inter alia,* a circuit for processing detection signals from the detection unit 82 is mounted. The detector circuit board 83 is attached to the end plate 26 or the detector cover 27.

The output-side detector 9 is incorporated inside the center hole 61 of the output member 6 through which the front end part 72 of the sleeve 7 passes, and is provided with a code wheel 91 (rotation-side detector component), which is a rotation-side detector component attached at the side having the output member 6, and a circuit board 93 (fixed-side detector component) on which is installed a detection unit 92 attached at the side having the front end part 72 of the sleeve 7. In the present example, an annular base 94 is coaxially fixed to an inner peripheral surface of the center hole 61 of the output member 6, and the code wheel 91 is attached to an annular end surface facing axially rearward in the base 94. A cylindrical base 95 is coaxially fixed to an outer peripheral surface portion of the sleeve 7 extending through a center hole of the boss 424 of the externally toothed gear 42. At a front end of the base 95 is formed an annular end surface, which faces an annular end surface of the base 94 at the side having the output member 6, the circuit board 93 on which the detection unit is installed is attached to the annular end surface of the base 95, and the detection unit faces the code wheel 91 from the rear at a fixed spacing. The sleeve 7 is supported through the base 95 by a bearing 10 attached to an inner peripheral surface of the center hole of the rigid plug 431 of the wave generator 43.

An outer peripheral surface of the front end part 72 of the sleeve 7 and an inner peripheral surface of the annular base 94 attached to the output member 6 are sealed by an oil seal 11 disposed therebetween. The rear end part 71 of the sleeve 7 and the inner peripheral edge part 271 of the detector cover 27 are fixed together in a sealed state. This prevents lubricant from leaking out from the inside of the strain wave gearing 4 along the outer peripheral surface of the sleeve 7, and also prevents foreign matter such as dust from infiltrating into the detector cover 27 from the outside.

Next, wires (signal transmission paths) routed from the output-side detector 9 disposed on the front side of the strain wave gearing 4 are brought together on the detector circuit board 83 disposed on the rear side of the hollow motor 2, and from here the wires are routed to the outside. The wires routed from the circuit board 93 of the output-side detector 9 are routed to the axially rear side through a wire hole or wire groove formed in the base 94, as shown by an imaginary line 12. The wires routed rearward from the base 94 are routed to the rear of the hollow motor shaft 23 through a gap 13 formed between the outer peripheral surface of the sleeve 7 and the outer peripheral surface of the hollow motor shaft 23, and are connected to the detector circuit board 83. The wire portion routed along the outer peripheral surface of the sleeve 7 can also be a wire pattern printed on a flexible board adhered to the outer peripheral surface of the sleeve 7, or a wire pattern printed directly on the outer peripheral surface of the sleeve 7.

In the rotary actuator 1 configured in this manner, when the wave generator 43 of the strain wave gearing 4 is caused to rotate by the hollow motor shaft 23, relative rotation occurs between the internally toothed gear 41 and the externally toothed gear 42, the relative rotation corresponding to a difference in the number of teeth between the two gears. The externally toothed gear 42 rotates because the internally toothed gear 41 is a fixed-side member. The rotation of the externally toothed gear 42 is outputted as reduced rotation from the output member 6 attached thereto to a load side (not shown). A rotation position of the hollow motor shaft 23 is detected by the input-side detector 8, the rotation position of the output member 6 is detected by the output-side detector 9, and the rotation position of the output member 6 is controlled with precision on the basis of the detection results.

In the rotary actuator 1, the rear end part 71 of the cylindrical sleeve 7 extending axially through the center of the actuator is fixed to the detector cover 27, which is a rear end part of the motor housing 21, which is a fixed-side member, and the front end part 72 of the sleeve extends to the output member 6. The sleeve 7 is used as a fixed member and the front end part 72 of the sleeve 7, which is positioned near the center of rotation of the output member 6, is used as a part for attaching the fixed-side detection component of the output-side detector 9. The sleeve 7 is supported by the bearing 10 at a position partway along the axial direction, and is structured such that the centers of rotation of the sleeve and the output member 6 are readily aligned. It is thereby possible to minimize, *inter alia,* any decrease in the detection accuracy of the output-side detector 9 due to, *inter alia,* tilting of the output member 6. Since the output-side detector 9 is incorporated into the center hole of the output member 6, steps such as attaching a load-side member to the output member 6 can be easily performed from the axially front side without affecting the output-side detector 9.

Furthermore, unlike prior-art rotary actuators, the sleeve 7 does not rotate integrally with the output member 6; therefore, the sleeve 7 can be used as a region for securing another component. Moreover, the actuator hollow portion 70 is formed by the sleeve 7, which is a fixed member. If members or components such as a wire group are disposed in the actuator hollow portion 70, there is no need to take measures to prevent such components from coming into contact with and damaging the sleeve 7, and wiring or the like can be easily performed using the actuator hollow portion 70.

Furthermore, wires routed from the output-side detector 9, which is set apart from the input-side detector 8 toward the front in the axial direction, are routed rearward using the gap between the hollow motor shaft 23 and the sleeve 7 and are brought together on the detector circuit board 83 of the input-side detector 8. This allows the outputs of both detectors 8, 9 to be brought together at one location and routed to the outside.

Next, in the rotary actuator 1, since the sleeve 7 extending to the rear end of the motor is a fixed member, there is no rotary sliding portion at the rear end of the motor. The rear end part 71 of the sleeve 7 and the detector cover 27 at the rear end part of the motor housing 21 can be reliably sealed together. Therefore, electric components and the like constituting the input-side detector 8 disposed in the space surrounded by the detector cover of the motor rear end part can be reliably protected from the outside.

## Claims

1. A rotary actuator comprising:
a hollow motor provided with a motor housing and a hollow motor shaft that is rotatably supported by the motor housing and extends to pass through in an axial direction;
a strain wave gearing that is coaxially disposed at a front end of the hollow motor in the axial direction and that reduces rotation outputted by the hollow motor;
an output member that is coaxially disposed at a front end of the strain wave gearing in the axial direction and that transmits the reduced rotation outputted from the strain wave gearing to a load side;
an output-side detector that detects a rotation state of the output member;
a cylindrical sleeve extending in the axial direction through the hollow motor shaft, the strain wave gearing, and the output member; and
an actuator hollow portion that is formed by the sleeve and is open at both ends in the axial direction,
the rotary actuator being **characterized in that**
the sleeve is a fixed-side member that has a rear end part fixed to a housing rear end part of the motor housing, the housing rear end part being positioned at a rear end of the motor housing in the axial direction, and
the output-side detector includes
a fixed-side detector component that is attached to a front end part of the sleeve passing through the output member, and
a rotation-side detector component that is attached to the output member so as to face the fixed-side detector component.

2. The rotary actuator of claim 1, comprising:
an input-side detector that detects a rotation state of the hollow motor shaft;
a detector circuit board attached to a region on a side having the motor housing where the rear end part of the sleeve is positioned; and
a signal transmission path connecting the detector circuit board and the fixed-side detector component of the output-side detector attached to the front end part of the sleeve,
the signal transmission path including a wire group disposed in a gap between the hollow motor shaft and the sleeve, a wire patten printed on a flexible board adhered to a sleeve outer peripheral surface of the sleeve, or a wire pattern directly printed on the sleeve outer peripheral surface.

3. The rotary actuator of claim 1, wherein
an oil seal is provided to seal between the front end part of the sleeve and the output member, and
the rear end part of the sleeve is fixed in a sealed state to the housing rear end part.

4. The rotary actuator of claim 1, wherein
the strain wave gearing has
a rigid internally toothed gear fixed to the motor housing,
a cup-shaped flexible externally toothed gear that is coaxially disposed on an inner side of the internally toothed gear and coaxially fixed to the output member,
a wave generator that is coaxially fitted to an inner side of the externally toothed gear and coaxially fixed to the hollow motor shaft, and
a reducer bearing that supports the internally toothed gear and the externally toothed gear so as to enable relative rotation,
the reducer bearing including an outer race that is attached to the internally toothed gear and an inner race that is attached to the output member or integrally formed on the output member.
